# EUROPEAN PATENT APPLICATION

(11) **EP 4 529 246 A1**
(43) Date of publication of application: **26.03.2025**
(21) Application number: 22941939.5
(22) Date of filing: 16.05.2022
(51) Int. Cl.: H04W 12/00, H04L 9/40, H04W 8/00, H04W 8/06, H04W 8/22, H04W 12/08, H04W 48/16, H04W 60/00, H04W 76/10, H04W 12/06

(54) **RELAY COMMUNICATION METHOD AND APPARATUS, COMMUNICATION DEVICE, AND STORAGE MEDIUM**

(71) Applicant: Beijing Xiaomi Mobile Software Co., Ltd., Beijing 100085 (CN)
(72) Inventor: LU, Wei, Beijing 100085 (CN)
(74) Representative: Hersina, Günter
(86) International application number: PCT/CN2022/093147
(87) International publication number: WO 2023/220893

(57) **Abstract**

Embodiments of the present disclosure provide a relay communication method. The method is performed by a first terminal, and the method comprises: sending capability information, the capability information being used for indicating at least one of the following: a mode of supporting a security establishment process based on a control plane (CP); and a mode of supporting a security establishment process based on a user plane (UP), the security establishment process comprising a security establishment process of relay discovery and/or relay communication.

## Description

### TECHNICAL FIELD

The present disclosure relates to but is not limited to the field of wireless communication technology, and more particularly relates to a method and an apparatus for relay communication, a communication device and a storage medium.

### BACKGROUND

In a security application of Proximity Services (ProSe) of the fifth generation (5G) mobile communication technology, there are two options of control plane (CP) based and user plane (UP) based solutions for establishing security for PC5 communication between a remote UE and User-to-Network (U2N) Relay, before which the Remote UE and U2N Relay need to discover each other. For U2N Relay discovery before the relay communication, there are also the proposal with two options of CP-based and UP-based security procedures.

In the related art, when the UE initiates the discovery procedure or relay communication establishment procedure, how the UE could select between the CP-based and UP-based security procedures is a problem to be considered.

### SUMMARY

Embodiments of the present disclosure provide a method and apparatus for relay communication, a communication device and a storage medium.

According to a first aspect of embodiments of the present disclosure, a method for relay communication is provided, which is performed by a first terminal. The method includes: sending capability information, in which the capability information indicates at least one of: supporting an option of a control plane (CP) based security procedure; or supporting an option of a user plane (UP) based security procedure, in which the security procedure includes a security procedure for relay discovery and/or relay communication.

In an embodiment, sending the capability information includes sending the capability information during a network registration procedure performed by the first terminal.

In an embodiment, the method further includes: receiving indication information, in which the indication information indicates an option of a security procedure selected by a first network element of the first terminal. The option of the security procedure includes one of: the option of the CP based security procedure; or the option of the UP based security procedure.

In an embodiment, receiving the indication information includes: receiving the indication information during a service authorization and information provisioning procedure.

In an embodiment, the method further includes: determining that the indication information is received, and triggering the security procedure.

In an embodiment, the method further includes: determining whether to execute the security procedure according to a comparison result between an option of a security procedure selected by a first network element of a first terminal and an option of a security procedure selected by a first network element of a second terminal. The first terminal and the second terminal are terminals for executing the security procedure.

In an embodiment, determining whether to execute the security procedure according to the comparison result between the option of the security procedure selected by the first network element of the first terminal and the option of the security procedure selected by the first network element of the second terminal includes: determining to execute the security procedure between the first terminal and the second terminal upon determining that the option of the security procedure selected by the first network element of the first terminal is the same as the option of the security procedure selected by the first network element of the second terminal; or determining not to execute the security procedure between the first terminal and the second terminal upon determining that the option of the security procedure selected by the first network element of the first terminal is different from the option of the security procedure selected by the first network element of the second terminal.

In an embodiment, triggering the security procedure includes: triggering a security procedure between the first terminal and a second terminal, in which an option of a security procedure selected by the first terminal is the same as an option of a security procedure selected by a first network element of the second terminal.

In an embodiment, the first network element is a policy control function (PCF).

According to a second aspect of embodiments of the present disclosure, a method for relay communication is provided, which is performed by a first network element. The method includes: receiving capability information, in which the capability information indicates at least one of: supporting an option of a CP based security procedure; or supporting an option of a UP based security procedure, in which the security procedure includes a security procedure for relay discovery and/or relay communication.

In an embodiment, receiving the capability information includes receiving the capability information during a network registration procedure performed by a first terminal.

In an embodiment, the method further includes: determining that the capability information is received, and selecting an option of a security procedure. The option of the security procedure includes one of: the option of the CP based security procedure; or the option of the UP based security procedure.

In an embodiment, the method further includes: sending indication information, in which the indication information indicates an option of a security procedure selected by the first network element.

In an embodiment, sending the indication information includes: sending the indication information during a service authorization and information provisioning procedure.

In an embodiment, the first network element is a PCF.

According to a third aspect of embodiments of the present disclosure, an apparatus for relay communication is provided, which includes: a sending module configured to send capability information, in which the capability information indicates at least one of: supporting an option of a CP based security procedure; or supporting an option of a UP based security procedure, in which the security procedure includes a security procedure for relay discovery and/or relay communication.

According to a fourth aspect of embodiments of the present disclosure, an apparatus for relay communication is provided, which includes: a receiving module configured to receive capability information, in which the capability information indicates at least one of: supporting an option of a CP based security procedure; or supporting an option of a UP based security procedure, in which the security procedure includes a security procedure for relay discovery and/or relay communication.

According to a fifth aspect of embodiments of the present disclosure, a communication device is provided, including a processor and a memory storing instructions executable by the processor. When the instructions are executed by the processor, the above method as described in any embodiment of the disclosure is implemented.

According to a sixth aspect of embodiments of the present disclosure, a computer storage medium storing computer executable instructions is provided. When the computer executable instructions are executed by a processor, the above method as described in any embodiment of the disclosure is implemented.

In the embodiments of the present disclosure, capability information is sent, in which the capability information indicates at least one of an option of a CP based security procedure, or supporting an option of a UP based security procedure; the security procedure includes a security procedure for relay discovery and/or relay communication. Here, since the capability information indicates the first terminal supports the option of the CP based security procedure and/or the option of the UP based security procedure, after receiving the capability information, the network device can determine whether to select the option of the CP based security procedure or the option of the UP based security procedure based on the capability information. Compared with the situation where the network does not know the capability supported by the terminal, the relay communication mechanism is improved, and the reliability of relay communication is increased.

### BRIEF DESCRIPTION OF THE DRAWINGS

FIG. 1 is a structural diagram illustrating a wireless communication system according to an example embodiment of the present disclosure.
FIG. 2 is a flowchart illustrating a method for relay communication according to an example embodiment of the present disclosure.
FIG. 3 is a flowchart illustrating a method for relay communication according to an example embodiment of the present disclosure.
FIG. 4 is a flowchart illustrating a method for relay communication according to an example embodiment of the present disclosure.
FIG. 5 is a flowchart illustrating a method for relay communication according to an example embodiment of the present disclosure.
FIG. 6 is a flowchart illustrating a method for relay communication according to an example embodiment of the present disclosure.
FIG. 7 is a flowchart illustrating a method for relay communication according to an example embodiment of the present disclosure.
FIG. 8 is a flowchart illustrating a method for relay communication according to an example embodiment of the present disclosure.
FIG. 9 is a flowchart illustrating a method for relay communication according to an example embodiment of the present disclosure.
FIG. 10 is a flowchart illustrating a method for relay communication according to an example embodiment of the present disclosure.
FIG. 11 is a flowchart illustrating a method for relay communication according to an example embodiment of the present disclosure.
FIG. 12 is a flowchart illustrating a method for relay communication according to an example embodiment of the present disclosure.
FIG. 13 is a flowchart illustrating a method for relay communication according to an example embodiment of the present disclosure.
FIG. 14 is a flowchart illustrating a method for relay communication according to an example embodiment of the present disclosure.
FIG. 15 is a flowchart illustrating a method for relay communication according to an example embodiment of the present disclosure.
FIG. 16 is a diagram illustrating an apparatus for relay communication according to an example embodiment of the present disclosure.
FIG. 17 is a diagram illustrating an apparatus for relay communication according to an example embodiment of the present disclosure.
FIG. 18 is a structural diagram illustrating a terminal according to an example embodiment of the present disclosure.
FIG. 19 is a block diagram illustrating a base station according to an example embodiment of the present disclosure.

### DETAILED DESCRIPTION

The present disclosure will be described hereinafter in details in conjunction with illustrative embodiments, and examples of the disclosure are shown in the drawings. Unless otherwise specified, identical numerals in different drawings represent identical or similar elements. The implementations in the following description do not include all implementations consistent with the embodiments of the present disclosure, and in contrast, they are merely examples of devices and methods consistent with some aspects of the embodiments of the present disclosure as specified in the appended claims.

The terms used in the embodiments of the present disclosure are for illustrative purposes only, but do not intend to limit the present disclosure. Such a singular form as "one", "a/an" or "the/said" used in the embodiments of the present disclosure and the appended claims also intends to include a plural form, unless otherwise defined. It should be appreciated that, the expression "and/or" used in the context is meant to include any combination, or all possible combinations, of one or more associated items.

It should be appreciated that, although such expressions as "first", "second" and "third" are used to describe various information, the information are not limited by these expressions. These expressions are merely used to differentiate the information of the same type from each other. For example, without departing from the scope of the present disclosure, first information may also be called as second information, and similarly second information may also be called as first information. Depending on the context, such a word as "if" may be construed as "when ...", "in the case that ..." or "in response to determining that ...".

For the purpose of simplicity and ease of understanding, the terms used in this text to represent a size relationship are "greater than" or "less than". However, for those skilled in the art, it can be understood that the term "greater than" also encompasses the meaning of "greater than or equal to", and "less than" also encompasses the meaning of "less than or equal to".

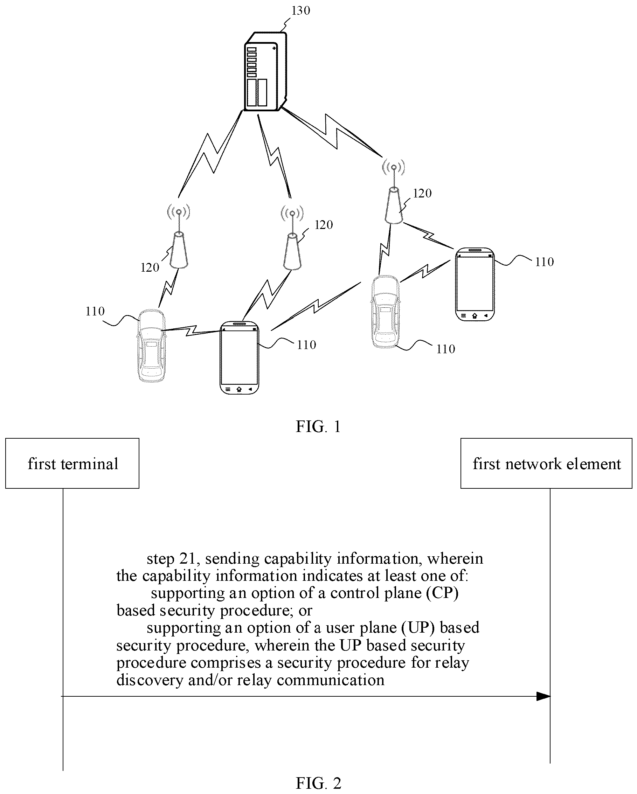

Referring to FIG. 1, it illustrates a structural diagram of a wireless communication system according to an embodiment of the present disclosure. As shown in FIG. 1, the wireless communication system is a communication system based on a mobile communication technology, which may include several user equipment (UE) 110 and several base stations 120.

The UE 110 may be a device for providing voice and/or data connectivity to a user. The UE 110 may communicate with one or more core networks via a Radio Access Network (RAN). The UE 110 may be an Internet of Things (IoT) terminal, e.g., a sensor device or a mobile phone, or a computer having the IoT terminal, e.g., an immobile, portable, pocket-sized, handheld, built-in or vehicle-mounted device. For example, the UE may be a Station (STA), a subscriber unit, a subscriber station, a mobile station, a mobile, a remote station, an access point, a remote terminal, an access terminal, a user terminal, a user agent, or a user device. The UE 110 may also be a device for an unmanned aerial vehicle. The UE 110 may also be a vehicle-mounted device, e.g., an electronic control unit having a wireless communication function, or a wireless terminal coupled to an external electronic control unit. Alternatively, the UE 110 may also be a roadside device, e.g., a street lamp or a signal lamp having a wireless communication function, or any other roadside devices.

The base station 120 may be a network-side device in a wireless communication system. The wireless communication system may be the 5th generation (5G) system, also known as a new radio (NR) system or a 5G NR system. Alternatively, the wireless communication system may also be a next-generation system of the 5G system. The access network in the 5G system may be called a new generation-radio access network (NG-RAN).

The base station 120 may be a base station (gNB) that adopts a centralized distributed architecture in a 5G system. When the base station 120 adopts the centralized distributed architecture, it usually includes a central unit (CU) and at least two distributed units (DUs). The CU is provided with protocol stacks of a packet data convergence protocol (PDCP) layer, a radio link control (RLC) protocol layer, and a medium access control (MAC) layer. The DU is provided with a protocol stack of a physical (PHY) layer. The specific implementation of the base station 120 is not limited by this embodiment of the disclosure.

A wireless connection may be established between the base station 120 and the UE 110 through a radio interface. In different embodiments, the radio interface is a radio interface based on the fifth generation mobile communication network technology (5G) standard. For example, the radio interface is a new radio interface. Alternatively, the radio interface may also be a radio interface based on a 5G next-generation mobile communication network technology standard.

In some embodiments, an end-to-end (E2E) connection may also be established between the UEs 11, for example, vehicle-to-vehicle (V2V) communication, vehicle to infrastructure (V2I) communication and vehicle to pedestrian (V2P) communication and other communication scenes in vehicle-to-everything (V2X) communication.

Here, the above-mentioned UE can be considered as the terminal in the following embodiments.

In some embodiments, the above wireless communication system may further include a network management device 130.

Several base stations 120 are respectively connected to the network management device 130. The network management device 130 may be a core network device in a wireless communication system. For example, the network management device 130 may be a mobility management entity (MME) in a 5G core network. Alternatively, the network management device may also be other core network devices, such as a policy and charging rules function (PCRF) or a user data management (UDM) server. The implementation of the network management device 130 is not limited by this embodiment of the disclosure.

In order to facilitate understanding of those skilled in the art, a plurality of implementations are listed in the embodiments of the present disclosure to clearly illustrate the technical solutions of the embodiments of the present disclosure. Those skilled in the art can understand that a plurality of embodiments provided in the embodiments of the present disclosure can be executed alone or in combination with the methods in other embodiments among the embodiments of the present disclosure, or can be executed alone or in combination with some methods in other related art. This is not limited by the embodiments of the present disclosure.

As shown in FIG. 2, an embodiment provides a method for relay communication, which performed by a first terminal, and the method includes the following step at 21.

At 21, capability information is sent, in which the capability information indicates at least one of: supporting an option of a control plane (CP) based security procedure; or supporting an option of a user plane (UP) based security procedure. The security procedure includes a security procedure for relay discovery and/or relay communication.

Here, the terminal involved in the present disclosure may be but is not limited to a mobile phone, a wearable device, a vehicle-mounted terminal, a road side unit (RSU), a smart home terminal, an industrial sensor device and/or a medical device, etc. In some embodiments, the terminal may be a reduced capability (Redcap) terminal or a NR terminal of a predetermined version (e.g., an NR terminal of R17 version). The first terminal in the present disclosure may be a relay terminal in relay communication, and the second terminal may be a remote terminal in relay communication. Alternatively, the first terminal in the present disclosure may be a remote terminal in relay communication, and the second terminal may be a relay terminal in relay communication.

The network element involved in the present disclosure may be a policy control function (PCF). It should be noted that the network elements capable of implementing the related technical solutions in the present disclosure are not limited to the above examples. In some implementations of the present disclosure, a network element may be deployed independently as a communication node, or may be uniformly deployed in an existing network element. In short, a network element may be understood as a logical node that may be flexibly deployed in a network, which is not limited herein.

In an embodiment, the first network element may be a PCF.

In an embodiment, the first terminal may send the capability information to the first network element (e.g., PCF) via a base station.

The base stations involved in the present disclosure may be various types of base stations, for example, a base station in a 5G mobile communication network or other evolved base station.

In an embodiment, the first terminal sends the capability information to a PCF of the first terminal via the base station, and the capability information indicates at least one of: supporting an option of a CP based security procedure; or supporting an option of a UP based security procedure; the security procedure includes a security procedure for relay discovery and/or relay communication.

In an embodiment, during a network registration procedure performed by the first terminal, the first terminal sends the capability information to the PCF of the first terminal via the base station, and the capability information indicates at least one of: supporting an option of a CP based security procedure; or supporting an option of a UP based security procedure; the security procedure includes a security procedure for relay discovery and/or relay communication.

In an embodiment, capability information is sent, in which the capability information indicates at least one of: supporting an option of a CP based security procedure; or supporting an option of a UP based security procedure; the security procedure includes a security procedure for relay discovery and/or relay communication. Indication information is received, in which the indication information indicates an option of a security procedure selected by a first network element of the first terminal; the option of the security procedure includes one of: the option of the CP based security procedure or the option of the UP based security procedure.

For example, the first terminal sends capability information to the first network element, in which the capability information indicates at least one of: supporting the option of the CP based security procedure; or supporting the option of the UP based security procedure; the security procedure includes a security procedure for relay discovery and/or relay communication. The first network element determines that the capability information is received and selects an option of a security procedure, in which the option of the security procedure includes one of: the option of the CP based security procedure or the option of the UP based security procedure. The first network element sends indication information to the first terminal, in which the indication information indicates an option of a security procedure selected by the first network element of the first terminal. The first terminal receives the indication information.

In an embodiment, capability information is sent, in which the capability information indicates at least one of: supporting an option of a CP based security procedure; or supporting an option of a UP based security procedure; the security procedure includes a security procedure for relay discovery and/or relay communication. Indication information is received during a service authorization and information provisioning procedure, in which the indication information indicates an option of a security procedure selected by a first network element of the first terminal, and the option of the security procedure includes one of: the option of the CP based security procedure or the option of the UP based security procedure.

In an embodiment, capability information is sent, in which the capability information indicates at least one of: supporting an option of a CP based security procedure; or supporting an option of a UP based security procedure; the security procedure includes a security procedure for relay discovery and/or relay communication. Indication information is received, in which the indication information indicates an option of a security procedure selected by a first network element of the first terminal, and the option of the security procedure includes one of: the option of the CP based security procedure or the option of the UP based security procedure. It is determined that the indication information is received, and the security procedure is triggered.

In an embodiment, capability information is sent, in which the capability information indicates at least one of: supporting an option of a CP based security procedure; or supporting an option of a UP based security procedure; the security procedure includes a security procedure for relay discovery and/or relay communication. Indication information is received, in which the indication information indicates an option of a security procedure selected by a first network element of the first terminal; the option of the security procedure includes one of: the option of the CP based security procedure or the option of the UP based security procedure. It is determined that the indication information is received, and the security procedure is triggered. It is determined whether to execute the security procedure according to a comparison result between an option of a security procedure selected by a first network element of a first terminal and an option of a security procedure selected by a first network element of a second terminal. For example, upon determining that the option of the security procedure selected by the first network element of the first terminal is the same as the option of the security procedure selected by the first network element of the second terminal, it is determined to execute the security procedure between the first terminal and the second terminal. Alternatively, upon determining that the option of the security procedure selected by the first network element of the first terminal is different from the option of the security procedure selected by the first network element of the second terminal, it is determined not to execute the security procedure between the first terminal and the second terminal.

In an embodiment, capability information is sent, in which the capability information indicates at least one of: supporting an option of a CP based security procedure; or supporting an option of a UP based security procedure; the security procedure includes a security procedure for relay discovery and/or relay communication. Indication information is received, in which the indication information indicates an option of a security procedure selected by a first network element of the first terminal, and the option of the security procedure includes one of: the option of the CP based security procedure or the option of the UP based security procedure. It is determined that the indication information is received, and the security procedure is triggered between the first terminal and the second terminal, in which an option of a security procedure selected by the first terminal is the same as an option of a security procedure selected by a first network element of the second terminal.

In order to better understand the embodiments of the present disclosure, the technical solution of the present disclosure is further described below through an exemplary embodiment:

### Example 1:

This embodiment provides a method for relay communication, which includes the following steps at a1 to a9.

At step a1, when the relay terminal registers with the network, capability information is sent to the PCF via the base station, in which the capability information indicates at least one of the following situations where the relay terminal supports an option of a CP based security procedure, or where the relay terminal supports an option of a UP based security procedure; the security procedure includes a security procedure for relay discovery and/or relay communication.

At step a2, the PCF of the relay terminal selects an option of a security procedure based on the capability information, in which the option of the security procedure includes one of: the option of the CP based security procedure or the option of the UP based security procedure.

At step a3, when the remote terminal registers with the network, capability information is sent to the PCF via the base station, in which the capability information indicates at least one of the following situations where the remote terminal supports the option of the CP based security procedure, or where the remote terminal supports the option of the UP based security procedure; the security procedure includes a security procedure for relay discovery and/or relay communication.

At step a4, the PCF of the remote terminal selects a security procedure based on the capability information, in which the option of the security procedure includes one of: the option of the CP based security procedure, or the option of the UP based security procedure.

At step a5, during the service authorization and information provisioning procedure of the relay terminal, the PCF of the relay terminal sends indication information to the relay terminal. The indication information indicates an option of a security procedure selected by the PCF of the relay terminal; and the option of the security procedure includes one of: the option of the CP based security procedure, or the option of the UP based security procedure.

At step a6, during the service authorization and information provisioning procedure of the remote terminal, the PCF of the remote terminal sends indication information to the remote terminal. The indication information indicates an option of a security procedure selected by the PCF of the remote terminal; the option of the security procedure includes one of: the option of the CP based security procedure, or the option of the UP based security procedure.

At step a7, the relay terminal determines that the indication information is received and triggers the security procedure.

At step a8, the remote terminal determines that the indication information is received, and triggers the security procedure.

At step a9, if the security procedures selected by the PCF of the relay terminal and the PCF of the remote terminal are consistent (both terminals use the CP based security procedure or both terminals use the UP based security procedure), the discovery procedure between the relay terminal and the remote terminal can proceed, as well as the subsequent relay communication procedure. If the security procedures selected by the PCF of the relay terminal and the PCF of the remote terminal are different (one terminal uses CP based security procedure and the other terminal uses UP based security procedure), the discovery procedure between the relay terminal and remote terminal cannot proceed. The remote terminal needs to further discover a relay terminal which uses the same security procedure. The relay terminal needs to further discover a remote terminal which uses the same security procedure.

In the embodiments of the present disclosure, capability information is sent, in which the capability information indicates at least one of an option of a CP based security procedure, or supporting an option of a UP based security procedure; the security procedure includes a security procedure for relay discovery and/or relay communication. Here, since the capability information indicates the first terminal supports the option of the CP based security procedure and/or the option of the UP based security procedure, after receiving the capability information, the network device can determine whether to select the option of the CP based security procedure or the option of the UP based security procedure based on the capability information. Compared with the situation where the network does not know the capability supported by the terminal, the relay communication mechanism is improved, and the reliability of relay communication is increased.

It should be noted that those skilled in the art may understand that the method in the embodiments of the present disclosure can be executed alone or together with some methods in the embodiments of the present disclosure or some methods in related art.

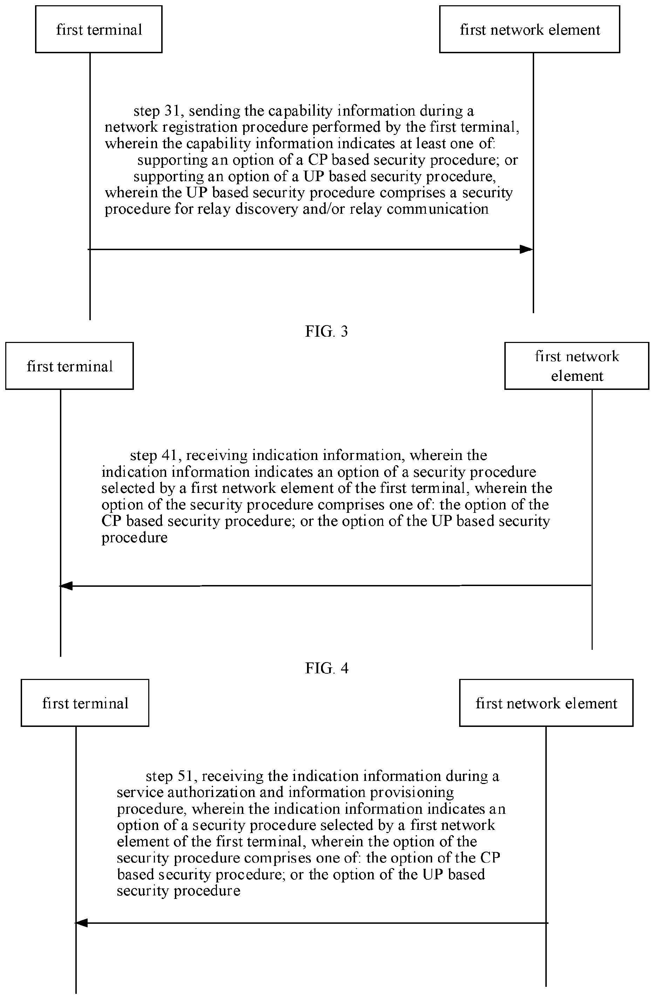

As shown in FIG. 3, an embodiment provides a method for relay communication, which performed by a first terminal, and the method includes the following step at 31.

At 31, capability information is sent during a network registration procedure performed by the first terminal, in which the capability information indicates at least one of: supporting an option of a CP based security procedure; or supporting an option of a UP based security procedure. The security procedure includes a security procedure for relay discovery and/or relay communication.

In an embodiment, during a network registration procedure performed by the first terminal, the first terminal sends capability information to a PCF of the first terminal via a base station, in which the capability information indicates at least one of: supporting an option of a CP based security procedure; or supporting an option of a UP based security procedure; and the security procedure includes a security procedure for relay discovery and/or relay communication.

It should be noted that those skilled in the art may understand that the method in the embodiments of the present disclosure can be executed alone or together with some methods in the embodiments of the present disclosure or some methods in the related art.

As shown in FIG. 4, an embodiment provides a method for relay communication, which performed by a first terminal, and the method includes the following step at 41.

At 41, indication information is received, in which the indication information indicates an option of a security procedure selected by a first network element of the first terminal, and the option of the security procedure includes one of: the option of the CP based security procedure; or the option of the UP based security procedure.

In an embodiment, the capability information is sent, in which the capability information indicates at least one of: supporting an option of a CP based security procedure; or supporting an option of a UP based security procedure; the security procedure includes a security procedure for relay discovery and/or relay communication. The indication information is received, in which the indication information indicates the option of the security procedure selected by the first network element of the first terminal, and the option of the security procedure includes one of: the option of the CP based security procedure; or the option of the UP based security procedure.

It should be noted that those skilled in the art may understand that the method in the embodiments of the present disclosure may be executed alone or together with some methods in the embodiments of the present disclosure or some methods in the related art.

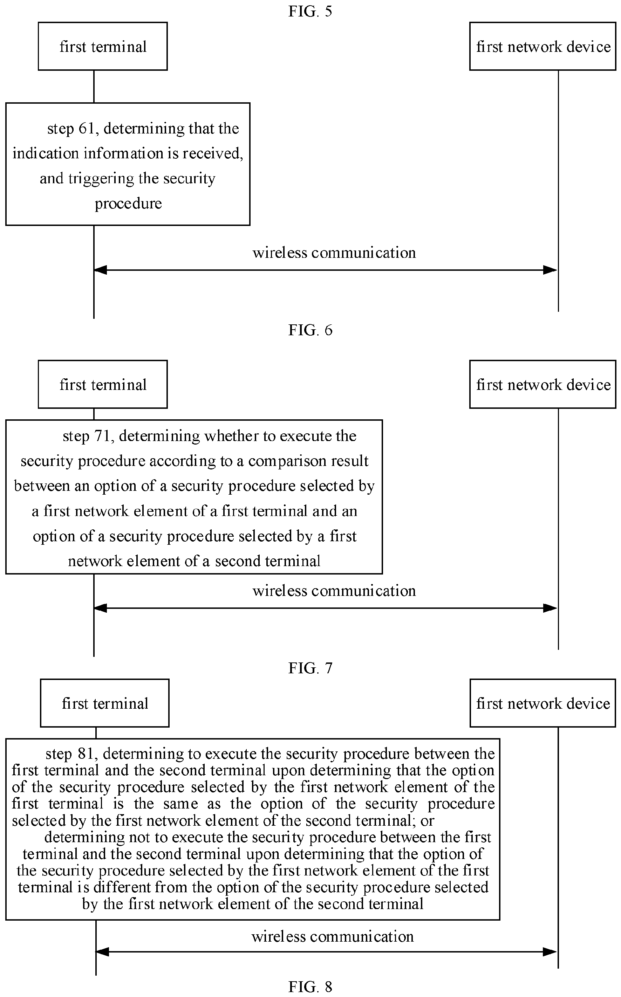

As shown in FIG. 5, an embodiment provides a method for relay communication, which performed by a first terminal, and the method includes the following step at 51.

At 51, the indication information is received during a service authorization and information provisioning procedure, in which the indication information indicates an option of a security procedure selected by a first network element of the first terminal; and the option of the security procedure comprises one of: the option of the CP based security procedure; or the option of the UP based security procedure.

In an embodiment, the capability information is sent, in which the capability information indicates at least one of: supporting an option of a CP based security procedure; or supporting an option of a UP based security procedure; the security procedure includes a security procedure for relay discovery and/or relay communication. The indication information is received during the service authorization and information provisioning procedure, in which the indication information indicates the option of the security procedure selected by the first network element of the first terminal, and the option of the security procedure includes one of: the option of the CP based security procedure; or the option of the UP based security procedure.

It should be noted that those skilled in the art may understand that the method in the embodiments of the present disclosure can be executed alone or together with some methods in the embodiments of the present disclosure or some methods in the related art.

As shown in FIG. 6, an embodiment provides a method for relay communication, which performed by a first terminal, and the method includes the following step at 61.

At 61, it is determined that the instruction information is received, and the security procedure is triggered.

In an embodiment, capability information is sent, in which the capability information indicates at least one of: supporting an option of a CP based security procedure; or supporting an option of a UP based security procedure; the security procedure includes a security procedure for relay discovery and/or relay communication. Indication information is received, in which the indication information indicates an option of a security procedure selected by a first network element of the first terminal; the option of the security procedure includes one of: the option of the CP based security procedure or the option of the UP based security procedure. It is determined that the indication information is received, and the security procedure is triggered.

It should be noted that those skilled in the art may understand that the method in the embodiments of the present disclosure can be executed alone or together with some methods in the embodiments of the present disclosure or some methods in the related art.

As shown in FIG. 7, an embodiment provides a method for relay communication, which performed by a first terminal. The first terminal and the second terminal are terminals for executing the security procedure. The method includes the following step at 71.

At 71, it is determined whether to execute the security procedure according to a comparison result between an option of a security procedure selected by a first network element of a first terminal and an option of a security procedure selected by a first network element of a second terminal

In an embodiment, capability information is sent, in which the capability information indicates at least one of: supporting an option of a CP based security procedure; or supporting an option of a UP based security procedure; the security procedure includes a security procedure for relay discovery and/or relay communication. Indication information is received, in which the indication information indicates an option of a security procedure selected by a first network element of the first terminal; the option of the security procedure includes one of: the option of the CP based security procedure or the option of the UP based security procedure. It is determined that the indication information is received, and the security procedure is triggered. It is determined whether to execute the security procedure according to a comparison result between an option of a security procedure selected by a first network element of a first terminal and an option of a security procedure selected by a first network element of a second terminal. For example, upon determining that the option of the security procedure selected by the first network element of the first terminal is the same as the option of the security procedure selected by the first network element of the second terminal, it is determined to execute the security procedure between the first terminal and the second terminal. Alternatively, upon determining that the option of the security procedure selected by the first network element of the first terminal is different from the option of the security procedure selected by the first network element of the second terminal, it is determined not to execute the security procedure between the first terminal and the second terminal.

It should be noted that those skilled in the art may understand that the method in the embodiments of the present disclosure can be executed alone or together with some methods in the embodiments of the present disclosure or some methods in the related art.

As shown in FIG. 8, an embodiment provides a method for relay communication, which is performed by a first terminal, and the method includes the following step at 81.

At 81, upon determining that the option of the security procedure selected by the first network element of the first terminal is the same as the option of the security procedure selected by the first network element of the second terminal, it is determined to execute the security procedure between the first terminal and the second terminal. Alternatively, upon determining that the option of the security procedure selected by the first network element of the first terminal is different from the option of the security procedure selected by the first network element of the second terminal, it is determined not to execute the security procedure between the first terminal and the second terminal.

For the description of step 81, please refer to the description of step 71, which will not be repeated here.

It should be noted that those skilled in the art may understand that the method in the embodiments of the present disclosure may be executed alone or together with some methods in the embodiments of the present disclosure or some methods in the related art.

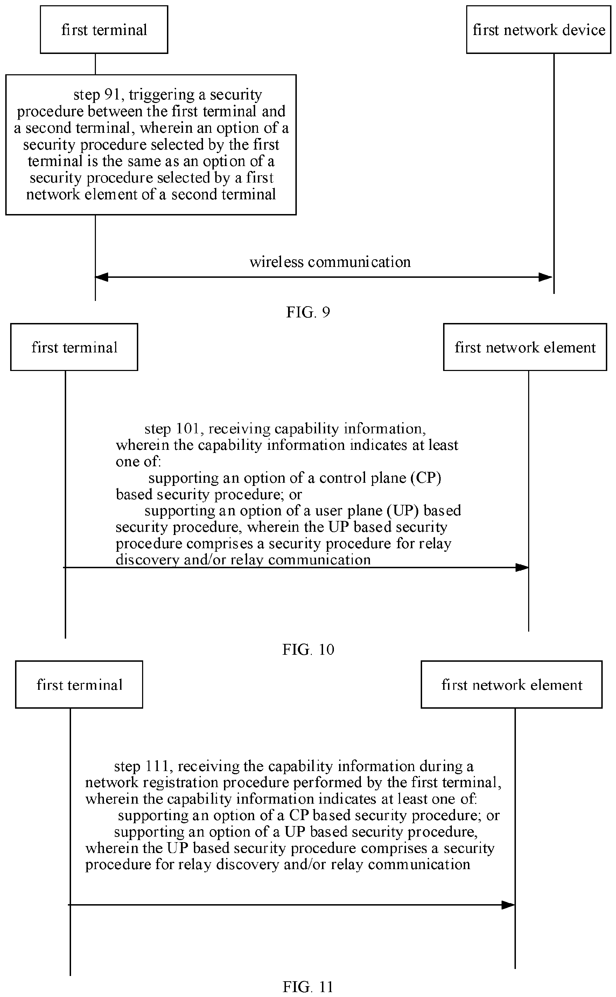

As shown in FIG. 9, an embodiment provides a method for relay communication, which is performed by a first terminal, and the method includes the following step at 91.

At 91, the security procedure is triggered between the first terminal and the second terminal, in which an option of a security procedure selected by the first terminal is the same as an option of a security procedure selected by a first network element of the second terminal.

In an embodiment, capability information is sent, in which the capability information indicates at least one of: supporting an option of a CP based security procedure; or supporting an option of a UP based security procedure; the security procedure includes a security procedure for relay discovery and/or relay communication. Indication information is received, in which the indication information indicates an option of a security procedure selected by a first network element of the first terminal; the option of the security procedure includes one of: the option of the CP based security procedure or the option of the UP based security procedure. It is determined that the indication information is received, and the security procedure is triggered. That is, the security procedure is triggered between the first terminal and the second terminal, in which an option of a security procedure selected by the first terminal is the same as an option of a security procedure selected by a first network element of the second terminal.

It should be noted that those skilled in the art may understand that the method in the embodiments of the present disclosure may be executed alone or together with some methods in the embodiments of the present disclosure or some methods in the related art.

As shown in FIG. 10, an embodiment provides a method for relay communication, which is performed by a first network element, and the method includes the following step at 101.

At 101, capability information is sent, in which the capability information indicates at least one of: supporting an option of a CP based security procedure; or supporting an option of a UP based security procedure. The security procedure includes a security procedure for relay discovery and/or relay communication.

Here, the terminal involved in the present disclosure may be but is not limited to a mobile phone, a wearable device, a vehicle-mounted terminal, a RSU, a smart home terminal, an industrial sensor device and/or a medical device, etc. In some embodiments, the terminal may be a Redcap terminal or a NR terminal of a predetermined version (e.g., an NR terminal of R17 version). The first terminal in the present disclosure may be a relay terminal in relay communication, and the second terminal may be a remote terminal in relay communication. Alternatively, the first terminal in the present disclosure may be a remote terminal in relay communication, and the second terminal may be a relay terminal in relay communication.

The network element involved in the present disclosure may be a PCF. It should be noted that the network elements capable of implementing the related technical solutions in the present disclosure are not limited to the above examples. In some implementations of the present disclosure, a network element may be deployed independently as a communication node, or may be uniformly deployed in an existing network element. In short, a network element may be understood as a logical node that may be flexibly deployed in a network, which is not limited herein.

In an embodiment, the first network element may be a PCF.

In an embodiment, the first network element (e.g., PCF) may receive the capability information from the first terminal via a base station.

The base stations involved in the present disclosure may be various types of base stations, for example, a base station in a 5G mobile communication network or other evolved base station.

In an embodiment, the PCF of the first terminal receives capability information from the first terminal via the base station, and the capability information indicates at least one of: supporting an option of a CP based security procedure; or supporting an option of a UP based security procedure; the security procedure includes a security procedure for relay discovery and/or relay communication.

In an embodiment, during a network registration procedure performed by the first terminal, the PCF of the first terminal receives capability information from the first terminal via the base station, and the capability information indicates at least one of: supporting an option of a CP based security procedure; or supporting an option of a UP based security procedure; the security procedure includes a security procedure for relay discovery and/or relay communication.

In an embodiment, capability information is received, in which the capability information indicates at least one of: supporting an option of a CP based security procedure; or supporting an option of a UP based security procedure; the security procedure includes a security procedure for relay discovery and/or relay communication. Indication information is sent, in which the indication information indicates an option of a security procedure selected by a first network element of the first terminal; the option of the security procedure includes one of: the option of the CP based security procedure or the option of the UP based security procedure.

For example, the first terminal sends capability information to the first network element, in which the capability information indicates at least one of: supporting the option of the CP based security procedure; or supporting the option of the UP based security procedure; the security procedure includes a security procedure for relay discovery and/or relay communication. The first network element determines that the capability information is received and selects an option of a security procedure, in which the option of the security procedure includes one of: the option of the CP based security procedure or the option of the UP based security procedure. The first network element sends indication information to the first terminal, in which the indication information indicates an option of a security procedure selected by the first network element of the first terminal. The first terminal receives the indication information.

In an embodiment, capability information is received, in which the capability information indicates at least one of: supporting an option of a CP based security procedure; or supporting an option of a UP based security procedure; the security procedure includes a security procedure for relay discovery and/or relay communication. Indication information is sent during a service authorization and information provisioning procedure, in which the indication information indicates an option of a security procedure selected by a first network element of the first terminal, and the option of the security procedure includes one of: the option of the CP based security procedure or the option of the UP based security procedure.

In an embodiment, capability information is received, in which the capability information indicates at least one of: supporting an option of a CP based security procedure; or supporting an option of a UP based security procedure; the security procedure includes a security procedure for relay discovery and/or relay communication. Indication information is sent, in which the indication information indicates an option of a security procedure selected by a first network element of the first terminal, and the option of the security procedure includes one of: the option of the CP based security procedure or the option of the UP based security procedure. The first terminal determines that the indication information is received, and triggers the security procedure.

In an embodiment, capability information is received, in which the capability information indicates at least one of: supporting an option of a CP based security procedure; or supporting an option of a UP based security procedure; the security procedure includes a security procedure for relay discovery and/or relay communication. It is determined that the capability information is received, and an option of a security procedure is selected, in which the option of the security procedure includes one of: the option of the CP based security procedure or the option of the UP based security procedure. Indication information is sent, in which the indication information indicates an option of a security procedure selected by a first network element of the first terminal. The first terminal determines that the indication information is received, and triggers the security procedure. The first terminal determines, according to a comparison result between an option of a security procedure selected by a first network element of a first terminal and an option of a security procedure selected by a first network element of a second terminal, whether to execute the security procedure. For example, the first terminal determines to execute the security procedure between the first terminal and the second terminal, upon determining that the option of the security procedure selected by the first network element of the first terminal is the same as the option of the security procedure selected by the first network element of the second terminal. Alternatively, the first terminal determines not to execute the security procedure between the first terminal and the second terminal, upon determining that the option of the security procedure selected by the first network element of the first terminal is different from the option of the security procedure selected by the first network element of the second terminal.

In an embodiment, capability information is received, in which the capability information indicates at least one of: supporting an option of a CP based security procedure; or supporting an option of a UP based security procedure; the security procedure includes a security procedure for relay discovery and/or relay communication. Indication information is sent, in which the indication information indicates an option of a security procedure selected by a first network element of the first terminal, and the option of the security procedure includes one of: the option of the CP based security procedure or the option of the UP based security procedure. The first terminal determines that the indication information is received, and triggers the security procedure between the first terminal and the second terminal, in which an option of a security procedure selected by the first terminal is the same as an option of a security procedure selected by a first network element of the second terminal.

It should be noted that those skilled in the art may understand that the method in the embodiments of the present disclosure may be executed alone or together with some methods in the embodiments of the present disclosure or some methods in the related art.

As shown in FIG. 11, an embodiment provides a method for relay communication, which performed by a first network element, and the method includes the following step at 111.

At 111, capability information is received during a network registration procedure performed by the first terminal, in which the capability information indicates at least one of: supporting an option of a CP based security procedure; or supporting an option of a UP based security procedure. The security procedure includes a security procedure for relay discovery and/or relay communication.

In an embodiment, during a network registration procedure performed by the first terminal, a PCF of the first terminal receives the capability information from the first terminal via a base station, in which the capability information indicates at least one of: supporting an option of a CP based security procedure; or supporting an option of a UP based security procedure; and the security procedure includes a security procedure for relay discovery and/or relay communication.

It should be noted that those skilled in the art may understand that the method in the embodiments of the present disclosure can be executed alone or together with some methods in the embodiments of the present disclosure or some methods in the related art.

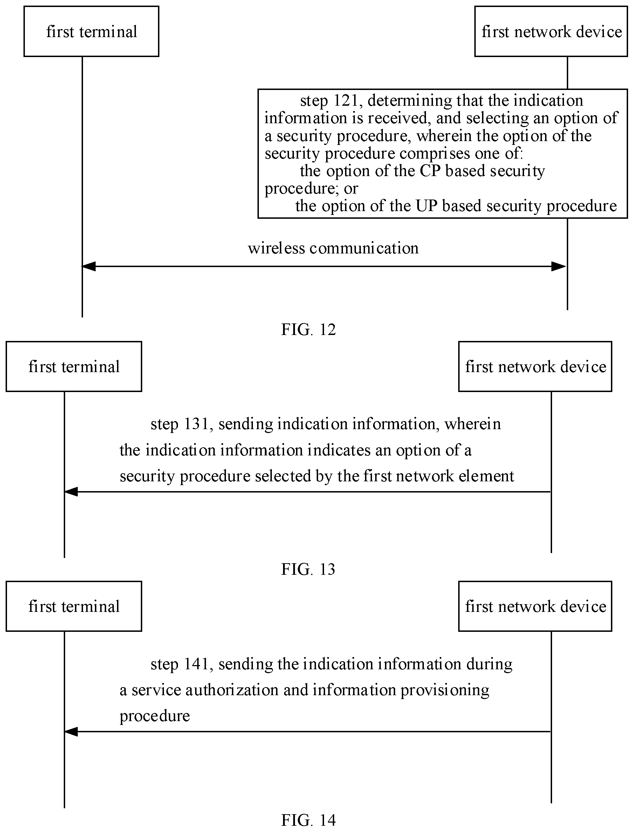

As shown in FIG. 12, an embodiment provides a method for relay communication, which performed by a first network element, and the method includes the following step at 121.

At 121, it is determined that the indication information is received, and an option of a security procedure is selected, in which the option of the security procedure includes one of: the option of the CP based security procedure; or the option of the UP based security procedure.

In an embodiment, the capability information is received, in which the capability information indicates at least one of: supporting an option of a CP based security procedure; or supporting an option of a UP based security procedure; the security procedure includes a security procedure for relay discovery and/or relay communication. It is determined that the indication information is received and an option of a security procedure is selected, in which the option of the security procedure includes one of: the option of the CP based security procedure; or the option of the UP based security procedure. The indication information is sent, in which the indication information indicates the option of the security procedure selected by the first network element of the first terminal. The first terminal determines that the indication information is received, and triggers the security procedure. The first terminal determines, according to a comparison result between an option of a security procedure selected by a first network element of a first terminal and an option of a security procedure selected by a first network element of a second terminal, whether to execute the security procedure. For example, the first terminal determines to execute the security procedure between the first terminal and the second terminal, upon determining that the option of the security procedure selected by the first network element of the first terminal is the same as the option of the security procedure selected by the first network element of the second terminal. Alternatively, the first terminal determines not to execute the security procedure between the first terminal and the second terminal, upon determining that the option of the security procedure selected by the first network element of the first terminal is different from the option of the security procedure selected by the first network element of the second terminal.

It should be noted that those skilled in the art may understand that the method in the embodiments of the present disclosure may be executed alone or together with some methods in the embodiments of the present disclosure or some methods in the related art.

As shown in FIG. 13, an embodiment provides a method for relay communication, which performed by a first network element, and the method includes the following step at 131.

At 131, indication information is sent, in which the indication information indicates an option of a security procedure selected by a first network element of the first terminal.

In an embodiment, capability information is received, in which the capability information indicates at least one of: supporting an option of a CP based security procedure; or supporting an option of a UP based security procedure; the security procedure includes a security procedure for relay discovery and/or relay communication. Indication information is sent during a service authorization and information provisioning procedure, in which the indication information indicates an option of a security procedure selected by a first network element of the first terminal, and the option of the security procedure includes one of: the option of the CP based security procedure or the option of the UP based security procedure. The first terminal determines that the indication information is received, and triggers a security procedure between the first terminal and the second terminal; in which an option of a security procedure selected by the first terminal is the same as a security procedure selected by a first network element of the second terminal.

It should be noted that those skilled in the art may understand that the method provided in the embodiments of the present disclosure may be executed alone or together with some methods in the embodiments of the present disclosure or some methods in the related art.

As shown in FIG. 14, an embodiment provides a method for relay communication, which performed by a first network element, and the method includes the following step at 141.

At 141, the indication information is sent during a service authorization and information provisioning procedure.

For the description of step 141, please refer to the description of step 131, which will not be repeated here.

It should be noted that those skilled in the art may understand that the method in the embodiments of the present disclosure may be executed alone or together with some methods in the embodiments of the present disclosure or some methods in the related art.

In order to better understand the embodiments of the present disclosure, the technical solution of the present disclosure is further described below through an exemplary embodiment:

### Example 2:

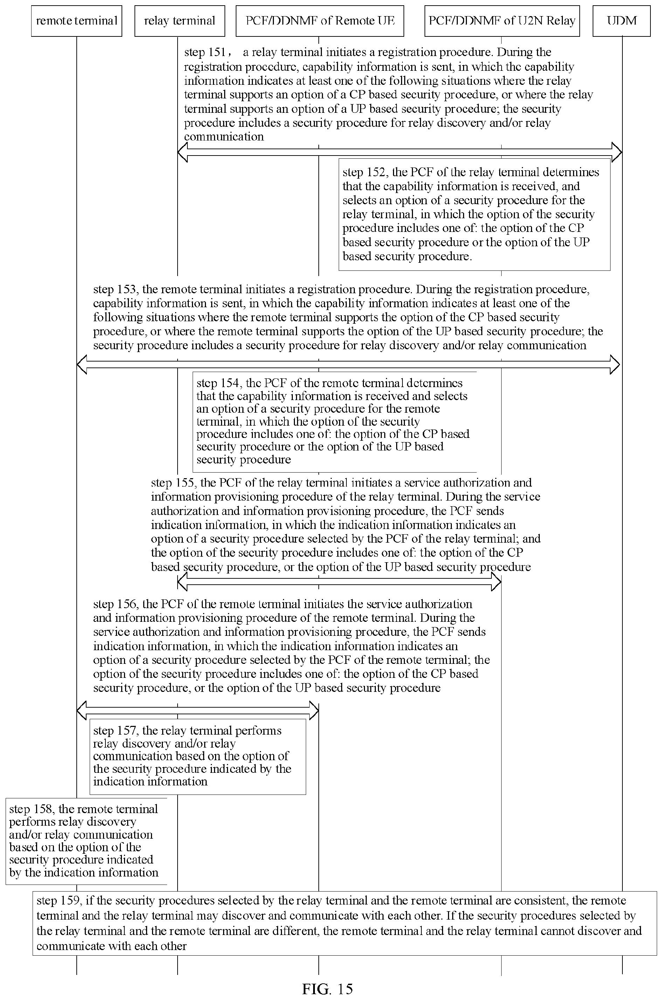

As shown in FIG. 15, an embodiment provides a method for relay communication, the method includes the following steps at 151-159.

At 151, a relay terminal initiates a registration procedure. During the registration procedure, capability information is sent, in which the capability information indicates at least one of the following situations where the relay terminal supports an option of a CP based security procedure, or where the relay terminal supports an option of a UP based security procedure; the security procedure includes a security procedure for relay discovery and/or relay communication.

At 152, the PCF of the relay terminal determines that the capability information is received, and selects an option of a security procedure for the relay terminal, in which the option of the security procedure includes one of: the option of the CP based security procedure or the option of the UP based security procedure.

At 153, the remote terminal initiates a registration procedure. During the registration procedure, capability information is sent, in which the capability information indicates at least one of the following situations where the remote terminal supports the option of the CP based security procedure, or where the remote terminal supports the option of the UP based security procedure; the security procedure includes a security procedure for relay discovery and/or relay communication.

At 154, the PCF of the remote terminal determines that the capability information is received and selects an option of a security procedure for the remote terminal, in which the option of the security procedure includes one of: the option of the CP based security procedure or the option of the UP based security procedure.

At 155, the PCF of the relay terminal initiates a service authorization and information provisioning procedure of the relay terminal. During the service authorization and information provisioning procedure, the PCF sends indication information, in which the indication information indicates an option of a security procedure selected by the PCF of the relay terminal; and the option of the security procedure includes one of: the option of the CP based security procedure, or the option of the UP based security procedure.

At 156, the PCF of the remote terminal initiates the service authorization and information provisioning procedure of the remote terminal. During the service authorization and information provisioning procedure, the PCF sends indication information, in which the indication information indicates an option of a security procedure selected by the PCF of the remote terminal; the option of the security procedure includes one of: the option of the CP based security procedure, or the option of the UP based security procedure.

At 157, the relay terminal performs relay discovery and/or relay communication based on the option of the security procedure indicated by the indication information.

At 158, the remote terminal performs relay discovery and/or relay communication based on the option of the security procedure indicated by the indication information.

At 159, if the security procedures selected by the relay terminal and the remote terminal are consistent, the remote terminal and the relay terminal may discover and communicate with each other. If the security procedures selected by the relay terminal and the remote terminal are different, the remote terminal and the relay terminal cannot discover and communicate with each other.

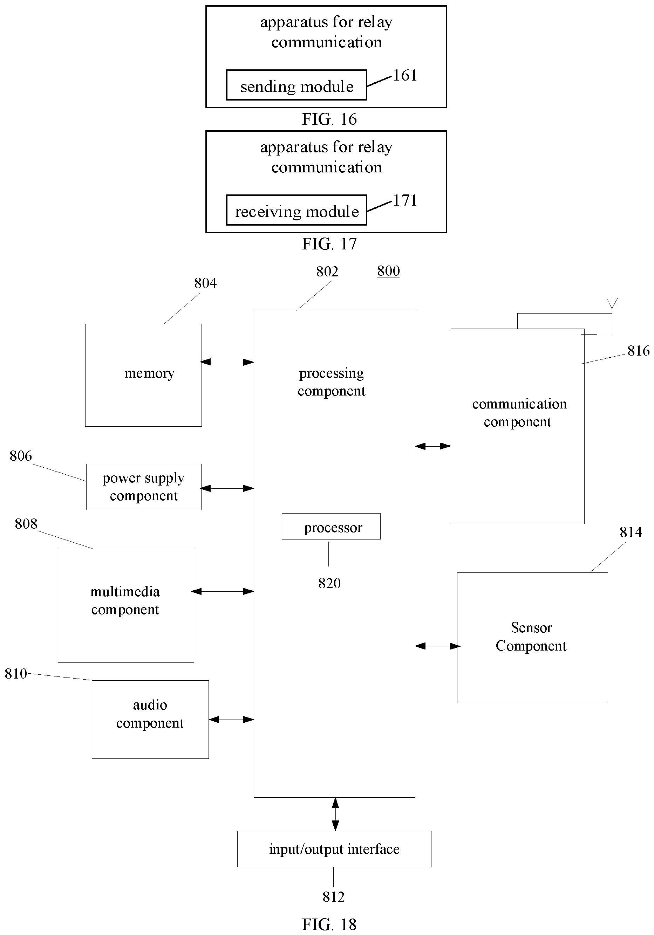

As shown in FIG. 16, an embodiment provides an apparatus for relay communication. The apparatus includes a sending module 161.

The sending module 161 is configured to send capability information, in which the capability information indicates at least one of: supporting an option of a CP based security procedure; or supporting an option of a UP based security procedure, in which the security procedure includes a security procedure for relay discovery and/or relay communication.

It should be noted that those skilled in the art may understand that the method provided in the embodiments of the present disclosure may be executed alone or together with some methods in the embodiments of the present disclosure or some methods in the related art.

As shown in FIG. 17, an embodiment provides an apparatus for relay communication. The apparatus includes a receiving module 171.

The receiving module 171 is configured to receive capability information, in which the capability information indicates at least one of: supporting an option of a CP based security procedure; or supporting an option of a UP based security procedure, in which the security procedure includes a security procedure for relay discovery and/or relay communication.

It should be noted that those skilled in the art may understand that the method provided in the embodiments of the present disclosure may be executed alone or together with some methods in the embodiments of the present disclosure or some methods in the related art.

The present disclosure provides a communication device, including: a processor and a memory storing instructions executable by the processor. When the instructions are executed by the processor, the above method as described in any embodiment of the disclosure is implemented.

The processor may include various types of storage media, which are non-transitory computer storage media that can continue to memorize information stored thereon after the communication device is off power.

The processor may be connected to the memory via a bus or the like to read the executable program stored in the memory.

An embodiment of the present disclosure further provides a computer storage medium storing a computer executable program. When the computer executable program is executed by a processor, the method as described in any embodiment of the present disclosure is implemented.

Regarding the apparatus in the above embodiment, the specific manner in which each module performs operations has been described in detail in the embodiment of the method, which will not be elaborated here.

As shown in FIG. 18, an embodiment of the present disclosure provides a terminal.

Referring to FIG. 18, it illustrates a structural diagram of a terminal 800 according to an embodiment of the present disclosure. For example, the terminal 800 is a mobile phone, a computer, a digital broadcasting terminal device, a message transceiver device, a game console, a flat-panel device, medical equipment, fitness equipment, or a personal digital assistant.

As shown in FIG. 18, the terminal 800 includes at least one component selected from the group consisting of a processing component 802, a memory 804, a power source component 806, a multi-media component 808, an audio component 810, an Input/Output (I/O) interface 812, a sensor component 814, and a communication component 816.

Generally, the processing component 802 controls an entire operation of the terminal 800, e.g., operations associated with display, phone call, data communication, camera operation and recording operation. The processing component 802 includes one or more processors 820 to execute an instruction, so as to implement all of, or a part of, the steps of the above-mentioned method. In addition, the processing component 802 includes one or more modules for the interaction between the processing component 802 and the other component. For example, the processing component 802 includes a multi-media module for the interaction between the multi-media component 808 and the processing component 802.

The memory 804 is configured to store therein various types of data to support the operation of the terminal 800. Examples of such data include instructions for any application or method operated on the terminal 800, contact data, phonebook data, messages, pictures, video, etc. The memory 804 may be implemented in the form of any type of volatile or non-volatile memory devices, or their combination, such as a Static Random-Access Memory (SRAM), an Electrically-Erasable Programmable Read Only Memory (EEPROM), an Erasable Programmable Read Only Memory (EPROM), a Programmable Read Only Memory (PROM), a Read Only Memory (ROM), a magnetic memory, a flash memory, a magnetic disk, or an optical disk.

The power source component 806 provides power to various components of the terminal 800. The power source component 806 may include a power management system, one or more power sources, and any other assemblies associated with the generation, management and distribution of power in the terminal 800.

The multi-media component 808 includes a screen for providing an output interface between the terminal 800 and a user. In some embodiments of the present disclosure, the screen may include a Liquid Crystal Display (LCD) and a Touch Panel (TP). When the screen includes the touch panel, the screen may be implemented as a touch screen to receive input signals from the user. The touch panel includes one or more touch sensors to sense touches, swipes, and gestures on the touch panel. The touch sensor may not only sense a boundary of a touch or swipe action, but also sense a period of time and a pressure associated with the touch or swipe action. In some embodiments of the present disclosure, the multi-media component 808 includes a front-facing camera and/or a rear-facing camera. When the terminal 800 is in an operating mode, such as a shooting mode or a video mode, the front-facing camera and/or the rear-facing camera may receive external multi-media data. Each of the front-facing camera and the rear-facing camera may be a fixed optical lens system or has focal length and optical zoom capability.

The audio component 810 is configured to output and/or input audio signals. For example, the audio component 810 includes a microphone (MIC) configured to receive an external audio signal when the terminal 800 is in an operating mode, such as a call mode, a recording mode, and a voice recognition mode. The received audio signal may be further stored in the memory 804 or transmitted via the communication component 816. In some embodiments, the audio component 810 further includes a speaker to output audio signals.

The I/O interface 812 provides an interface between the processing component 802 and peripheral interface modules, such as a keyboard, a click wheel, buttons, and the like. The buttons may include, but not limited to, a home button, a volume button, a starting button, and a locking button.

The sensor component 813 includes one or more sensors to provide status assessments about various aspects of the terminal 800. For example, the sensor component 813 may detect an open/closed status of the terminal 800, a relative positioning of components, e.g., the display and the keypad, of the terminal 800, a change in a position of the terminal 800 or an component of the terminal 800, a presence or absence of user contact with the terminal 800, an orientation or an acceleration/deceleration of the terminal 800, and a change in a temperature of the terminal 800. The sensor component 813 may include a proximity sensor configured to detect the presence of nearby objects without any physical contact. The sensor component 813 may also include a light sensor, such as a Complementary Metal Oxide Semiconductor (CMOS) or Charge-Coupled Device (CCD) image sensor, for use in imaging applications. In some embodiments, the sensor component 813 may also include an accelerometer sensor, a gyroscope sensor, a magnetic sensor, a pressure sensor, or a temperature sensor.

The communication component 816 is configured to facilitate wired or wireless communication between the terminal 800 and other devices. The terminal 800 may access a wireless network based on a communication standard, such as Wi-Fi, 2G or 3G, or their combination. In an exemplary embodiment of the present disclosure, the communication component 816 receives a broadcast signal or broadcast associated information from an external broadcast management system via a broadcast channel. In an exemplary embodiment of the present disclosure, the communication component 816 further includes a Near Field Communication (NFC) module to facilitate short-range communication. For example, the NFC module may be implemented based on an RF Identification (RFID) technology, an Infrared Data Association (IrDA) technology, an Ultra-Wide Band (UWB) technology, a Blue Tooth (BT) technology, and other technologies.

In the exemplary embodiment of the present disclosure, the terminal 800 may be implemented with one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, for performing the above-mentioned method.

In an example embodiment, a non-transitory computer-readable storage medium including instructions is also provided, such as the memory 804 including instructions. The instructions are executed by the processor 820 to complete the above methods. The non-transitory computer-readable storage medium may be a ROM, a random access memory (RAM), a CD-ROM, a magnetic tape, a floppy disk, and an optical data storage device.

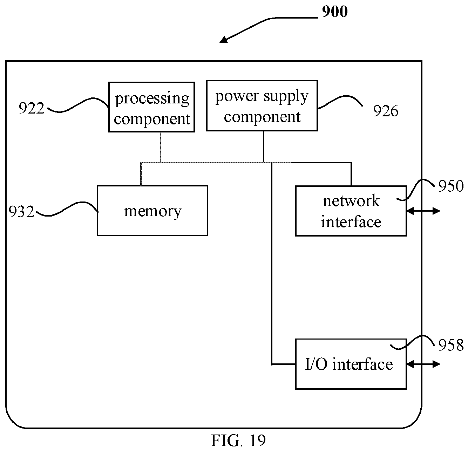

As shown in FIG. 19, an embodiment of the disclosure provides a base station. For example, the base station 900 is provided as a network side device. As shown in FIG. 19, the base station 900 includes a processing component 922, which further includes one or more processors and memory resources represented by a memory 932 for storing instructions to be executed by the processing component 922, e.g., applications. The applications stored in the memory 932 may include one or more modules each corresponding to one group of instructions. In addition, the processing component 922 is configured to execute the instructions, so as to implement any method for the base station.

The base station 900 further includes a power source component 926 configured to performed power management over the base station 900, a wired or wireless network interface 950 configured to couple the base station 900 to a network, and an Input/Output (I/O) interface 958. The base station 900 may be based on an operating system stored in the memory 932, e.g., Windows Server TM, Mac OS XTM, Unix TM, Linux TM, Free BSDTM, or the like.

Other embodiments of the present disclosure will be apparent to those skilled in the art from consideration of the specification and practice of the present disclosure disclosed here. This application is intended to cover any variations, uses, or adaptations of the disclosure following the general principles of the disclosure and including such departures from the disclosure as come within known or customary practice in the art. It is intended that the specification and examples be considered as exemplary only, with a true scope and spirit of the disclosure being indicated by the appended claims.

It should be appreciated that, the present disclosure is not limited to the exact construction that has been described hereinabove and illustrated in the accompanying drawings, and that various modifications and changes can be made without departing from the scope of the disclosure. It is intended that the scope of the present disclosure only be limited by the appended claims.

## Claims

1. A method for relay communication, performed by a first terminal, the method comprising:
sending capability information, wherein the capability information indicates at least one of:
supporting an option of a control plane (CP) based security procedure; or
supporting an option of a user plane (UP) based security procedure, wherein the security procedure comprises a security procedure for relay discovery and/or relay communication.

2. The method according to claim 1, wherein sending the capability information comprises:
sending the capability information during a network registration procedure performed by the first terminal.

3. The method according to claim 1, further comprising:
receiving indication information, wherein the indication information indicates an option of a security procedure selected by a first network element of the first terminal;
wherein the option of the security procedure comprises one of: the option of the CP based security procedure; or the option of the UP based security procedure.

4. The method according to claim 3, wherein receiving the indication information comprises:
receiving the indication information during a service authorization and information provisioning procedure.

5. The method according to claim 1, further comprising:
determining that the indication information is received, and triggering the security procedure.

6. The method according to claim 5, further comprising:
determining whether to execute the security procedure according to a comparison result between an option of a security procedure selected by a first network element of the first terminal and an option of a security procedure selected by a first network element of a second terminal; and
wherein the first terminal and the second terminal are terminals for executing the security procedure.

7. The method according to claim 6, wherein determining whether to execute the security procedure according to the comparison result between the option of the security procedure selected by the first network element of the first terminal and the option of the security procedure selected by the first network element of the second terminal comprises:
determining to execute the security procedure between the first terminal and the second terminal upon determining that the option of the security procedure selected by the first network element of the first terminal is the same as the option of the security procedure selected by the first network element of the second terminal; or
determining not to execute the security procedure between the first terminal and the second terminal upon determining that the option of the security procedure selected by the first network element of the first terminal is different from the option of the security procedure selected by the first network element of the second terminal.

8. The method according to claim 5, wherein triggering the security procedure comprises:
triggering a security procedure between the first terminal and a second terminal, wherein an option of a security procedure selected by the first terminal is the same as an option of a security procedure selected by a first network element of the second terminal.

9. A method for relay communication, performed by a first network element, the method comprising:
receiving capability information, wherein the capability information indicates at least one of:
supporting an option of a control plane (CP) based security procedure; or
supporting an option of a user plane (UP) based security procedure, wherein the security procedure comprises a security procedure for relay discovery and/or relay communication.

10. The method according to claim 9, wherein receiving the capability information comprises:
receiving the capability information during a network registration procedure performed by a first terminal.

11. The method according to claim 9, further comprising:
determining that the capability information is received, and selecting an option of a security procedure, wherein the option of the security procedure comprises one of:
the option of the CP based security procedure; or
the option of the UP based security procedure.

12. The method according to claim 11, further comprising:
sending indication information, wherein the indication information indicates an option of a security procedure selected by the first network element.

13. The method according to claim 12, wherein sending the indication information comprises:
sending the indication information during a service authorization and information provisioning procedure.

14. The method according to any one of claims 9 to 13, wherein the first network element is a policy control function (PCF).

15. An apparatus for relay communication, comprising:
a sending module, configured to send capability information, wherein the capability information indicates at least one of:
supporting an option of a control plane (CP) based security procedure; or
supporting an option of a user plane (UP) based security procedure, wherein the security procedure comprises a security procedure for relay discovery and/or relay communication.

16. An apparatus for relay communication, comprising:
a receiving module, configured to receive capability information, wherein the capability information indicates at least one of:
supporting an option of a control plane (CP) based security procedure; or
supporting an option of a user plane (UP) based security procedure, wherein the security procedure comprises a security procedure for relay discovery and/or relay communication.

17. A communication device, comprising: a memory, and a processor connected to the memory, wherein when computer executable instructions stored in the memory are executed by the processor, the processor is configured to implement the method according to any one of claims 1 to 8 or the method according to any one of claims 9 to 14.

18. A computer storage medium storing computer executable instructions which, when executed by a processor, the method according to any one of claims 1 to 8 or the method according to any one of claims 9 to 14 is implemented.
